# EUROPEAN PATENT APPLICATION

(11) **EP 4 538 324 A1**
(43) Date of publication of application: **16.04.2025**
(21) Application number: 23383039.7
(22) Date of filing: 10.10.2023
(51) Int. Cl.: C08L 23/08, C08J 5/18, C08J 3/00, C08J 3/20, C08L 33/02, C08L 29/04

(54) **POLYOLEFIN COMPOSITIONS**

(71) Applicant: Dow Global Technologies LLC, Midland, MI 48674 (US)
(72) Inventor: EVANGELIO ARAUJO, Laura, 43006 Tarragona (ES); LLOP MERINO, Cosme, 43006 Tarragona (ES); SEORRA ANDOLFATTO, Vitor, 43006 Tarragona (ES)
(74) Representative: Elzaburu S.L.P.

(57) **Abstract**

A polymer blend can be formed by melt-blending a polyolefin polymer with a quantity of polyacid polymer and polyol under conditions such that acid groups on the polyacid polymer react with hydroxyl groups on the polyol to form links between the polyacid polymer and the polyol. The condensation product polymer can improve physical properties of the polyolefin polymer.

## Description

### TECHNICAL FIELD

This application relates to the field of polyolefin compositions.

### BACKGROUND

Polyolefins include polyethylene and polypropylene homopolymers and copolymers. Polyolefins are widely used in molded and extruded articles. A common use for polyolefins is in extruded films for various packaging applications.

Polyolefins can provide a good combination of physical properties and chemical stability at a low cost. In particular, the physical properties of polyolefins can be adjusted to match the requirements of a particular application through selection and proportions of monomers, control of molecular weight profile and control of branching.

In some cases, different polymers are blended into polyolefins to adjust the properties of the polyolefins. However, blending polymers with polyolefin can raise new problems. Compatibility issues between the polyolefin and the added polymers may cause phase separation, which can harm the physical properties of the polymer blend. Further, blending other polymers with polyolefin may add cost to the polymer blend. Polymers that are blended with polyolefin may be more expensive than the polyolefin, and the process of blending may add extra processing steps that have additional costs.

It is desirable to identify blends of polyolefins with other polymers that easily form homogeneous blends and improve properties of the polyolefin using only small quantities of added polymer and with little additional processing costs.

### SUMMARY

A first aspect of the invention is a polyolefin composition comprising:
a) At least 50 weight percent of a polyolefin polymer;
b) At least 100 ppmw of a polyacid polymer, and
c) At least 20 ppmw of a polyol that is capable for reacting with the polyacid polymer to form ester cross-links,
wherein weight ratios are based on the combined weights of the polyolefin polymer, the polyacid polymer and the polyol.

A second aspect of the invention is a process to make a polymer blend comprising the step of melt-blending the polyolefin composition in the first aspect of the invention under conditions such that the polyacid polymer and the polyol undergo condensation reaction to form ester groups linking the polyacid polymer and the polyol. The process makes a polymer blend that comprises a polyolefin polymer and a condensation product formed by the condensation of a polyacid polymer and a polyol, which is dispersed within the polyolefin polymer.

A third aspect of the invention is a polymer blend comprising:
a) At least 50 weight percent of a polyolefin polymer;
b) At least 150 ppm of a condensation product formed by the condensation of a polyacid polymer and a polyol, which is dispersed within the polyolefin polymer,
wherein the weight ratios are based on the combined weights of the polyolefin polymer and condensation product.

A fourth aspect of the invention is a film that comprises the polymer blend in the third aspect of the invention.

Without intending to be bound by theory, it is believed that the polyacid polymer and the polyol react to make a crosslinked polymer network that forms a semi-interpenetrating network (semi-IPN) within the polyolefin. Semi-interpenetrating polymer networks are known and described in many publications, such as Sperling, "Interpenetrating Polymer Networks: An Overview", published by the American Chemical Society (1994) and Kulkarni, "Interpenetrating Polymer Network - A Promising Method for Widening Applications of Polymers", 7(4) International Journal of Research and Review 74 (April 2020). Semi-IPN contain a cross-linked network of one polymer and another non-cross-linked polymer that are interlaced on a polymer molecule scale. Semi-IPN are highly resistant to phase separation, so they usually remain homogeneous.

The polyacid polymer and the polyol can be blended with the polyolefin and reacted to form the condensation product during ordinary extrusion that is generally carried out on polyolefins, without the need for any additional process steps. Therefore, formation of the polymer blend adds little or no additional processing cost. In some embodiments, the polymer blend shows physical improvements over the polyolefin using only very small quantities of the polyacid polymer and polyol, such as less than 1 weight percent, and using no compatibilizers. As a result, this invention adds little cost to the polyolefin.

### DETAILED DESCRIPTION

In this invention, a polyacid polymer and polyol are blended into a polyolefin polymer, as described in the first aspect of the invention. The blend is subjected to conditions that cause condensation reactions, which link the polyacid polymer and the polyol. Examples of suitable conditions include the high temperature and high shear conditions of melt-blending, as described in the second aspect of the invention. The condensation product of the polyacid polymer and the polyol forms a polymer blend within the polyolefin polymer, as described in the third aspect of the invention. The polymer blend can be formed into shaped articles such as films, as described in the fourth aspect of the invention. Alternatively, a polymer blend can be made using a high concentration of polyacid polymer and polyol to form a masterbatch, which is pelletized; the masterbatch can later be blended with more polyolefin to achieve the desired level of condensation product and then molded or extruded for use.

The polyolefin composition comprises a polyolefin polymer, a polyacid polymer, and a polyol.

In some embodiments, the polyolefin polymer comprises polyethylene. In some embodiments, the polyolefin polymer comprises linear low density polyethylene.

In some embodiments, the polyacid polymer comprises a copolymer containing repeating units derived from acrylic acid or methacrylic acid and repeating units derived from one or more comonomers selected from the group consisting of ethylene, propylene and styrene. In some embodiments, the polyacid polymer is an ionomer. In other embodiments, the polyacid polymer is not an ionomer.

In some embodiments, the polyol comprises a copolymer containing vinyl alcohol repeating units and repeating units derived from ethylene, propylene or styrene. In some embodiments, the molar ratio of acid groups in the polyacid polymer to hydroxyl groups in the polyol is from 5:1 to 1:5.

In some embodiments, the polyolefin polymer is a polyethylene polymer and makes up at least 75 weight percent of the polyolefin composition; the polyacid polymer comprises a copolymer containing repeating units derived from acrylic acid or methacrylic acid and repeating units derived from ethylene; and the polyol comprises a copolymer of containing vinyl alcohol repeating units and repeating units derived from ethylene, wherein the molar ratio of acid groups in the polyacid polymer to hydroxyl groups in the polyol is from 5:1 to 1:5 and wherein weight ratios are based on the combined weights of polyolefin polymer, polyacid polymer and polyol. In some embodiments, the polyolefin composition comprises from 75 to 98 weight percent of the polyolefin polymer, from 2 to 20 weight percent of the polyacid polymer, and from 1 to 10 weight percent of the polyol, wherein the weight percent is based on the combined weights of the polyolefin polymer, the polyacid polymer, and the polyol. In some embodiments, the polyolefin composition comprises: at least 98 weight percent of the polyolefin polymer; from 100 ppmw to 2000 ppmw of the polyacid polymer; and from 50 ppmw to 1000 ppmw of the polyol, wherein the weight percent is based on the combined weights of the polyolefin polymer, the polyacid polymer, and the polyol.

### Polyolefin Component

The invention uses a polyolefin polymer. In some embodiments, the polyolefin polymer is a polyethylene polymer. In some embodiments, the polyolefin polymer is a polypropylene polymer. In some embodiments, the polyolefin polymer is an elastomer, and in some embodiments, it is not an elastomer. The selection of polyolefin polymer may be highly dependent on the intended use of the polymer.

The polyethylene (PE) polymers that can be used in the invention may be homopolymers or copolymers. PE homopolymers consist essentially of repeating units derived from ethylene, without significant repeating units derived from comonomers. PE copolymers comprise at least 70 weight percent repeating units derived from ethylene, but also contain repeating units derived from comonomers. Examples of suitable comonomers may include alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the alpha-olefin is selected from the group consisting of propylene, 1-butene, 1-pentene, 1-hexene, 4-methyl-1-pentene, 1-heptene, 1-octene, 1-nonene and 1-decene. In other embodiments, the alpha-olefin is selected from the group consisting of propylene, 1-butene, 1-hexene, and 1-octene. In further embodiments, the alpha-olefin is selected from the group consisting of 1-hexene and 1-octene.

Polyethylene polymers and copolymers are commonly divided into the groups:
- high density polyethylene (HDPE), which usually has a density around 0.93 g/cm³ to 0.98 g/ cm³;
- low density polyethylene (LDPE), which usually has a density around 0.91 g/cm³ to 0.93 g/cm³; and
- linear low density polyethylene (LLDPE), which usually has a density around 0.91 g/cm³ to 0.94 g/cm³.

Linear low-density polyethylenes contain short-chain branching and less long chain branching than LDPE and include the substantially linear ethylene polymers which are further described in U.S. Patent 5,272,236, U.S. Patent 5,278,272, U.S. Patent 5,582,923 and US Patent 5,733,155; homogeneously branched linear ethylene polymer compositions such as those in U.S. Patent No. 3,645,992; heterogeneously branched ethylene polymers such as those prepared according to the process disclosed in U.S. Patent No. 4,076,698; and/or blends thereof (such as those disclosed in US 3,914,342 or US 5,854,045).

In some embodiments, the polyethylene polymer is this invention is HDPE. In some embodiments, the polyolefin polymer is this invention is LDPE.

In some embodiments, the polyethylene polymer is this invention is LLDPE, having a density from 0.91 g/cm³ to 0.94 g/cm³. All individual values and subranges of 0.91 g/cm³ to 0.94 g/cm³ are included and disclosed herein. For example, in some embodiments, the density ranges from a lower limit of 0.910, 0.915, 0.920, 0.925, 0.930 or 0.935 g/cm³ to an upper limit of 0.940, 0.935, 0.930, 0.925, or 0.920 g/cm³.

Polyethylene polymers are frequently characterized in terms of melt index. In some embodiments, the melt index (I₂ - measured at 190°C/2.16kg) of the polyethylene polymer ranges from 0.01 g/10 min to 30 g/10 min. All individual values and subranges of 0.01 g/10 min to 30 g/10 min are included and disclosed herein. For example, in some embodiments, the melt index ranges from a lower limit of 0.01, 0.05, 0.1, 0.25, 0.5, 1, 3, 5, 7, 10, 12, 15, 18, 20, 23, or 25 to an upper limit of 30, 27, 25, 22, 20, 17, 15, 12, 10, 8, 5, 2, 1, 0.9, 0.7, or 0.5. In some embodiments, a polyethylene polymer used in film applications may have a melt index of at least 0.1 g/10 min or at least 0.3 g/10 min or at least 0.5 g/10 min or at least 0.7 g/10 min or at least 0.8 g/10 min. In some embodiments, a polyethylene polymer used in film applications may have a melt index of at most 10 g/10 min or at most 8 g/10 min or at most 6 g/10 min or at most 4 g/10 min or at most 2 g/10 min.

Suitable PE polymers are commercially available, such as under the DOW^{™} LDPE, DOWLEX^{™}, ELITE^{™}, INNATE^{™}, and AFFINITY^{™} trademarks. Others can be made by known processes, such as solution, slurry and/or gas-phase polymerization of ethylene monomer and optionally comonomers in the presence of Ziegler-Natta catalysts, metallocene catalysts or other single site catalysts.

Polypropylene (PP) polymers that are useful in the invention may be homopolymers or random copolymers or impact copolymers. PP homopolymers consist essentially of repeating units derived from propylene, without significant repeating units derived from comonomers. PP copolymers comprise at least 70 weight percent repeating units derived from propylene, but also contain repeating units derived from comonomers. Examples of suitable comonomers may include ethylene or other alpha-olefin comonomers as previously described. In many embodiments, the comonomer is ethylene. Impact copolymers are block copolymers, comprising blocks of polypropylene homopolymer and blocks of propylene-ethylene copolymer.

PP polymers that are useful in the invention may be isotactic or syndiotactic or atactic. In some embodiments, they are isotactic. In some embodiments, they are atactic. In some embodiments, they are syndiotactic.

PP polymers are frequently characterized in terms of melt index. In some embodiments, the melt index (I₂ measured at 230°C/2.16kg) of the PP polymer ranges from 0.2 g/10 min to 50 g/10 min. All individual values and subranges of 0.2 g/10 min to 50 g/10 min are included and disclosed herein. In some embodiments, a PP polymer used in film applications may have a melt index of at least 0.3 g/10 min or at least .05 g/10 min or at least 1 g/10 min or at least 2 g/10 min. In some embodiments, a PP polymer used in film applications may have a melt index of at most 50 g/10 min or at most 20 g/10 min or at most 10 g/10 min or at most 5 g/10 min or at most 4 g/10 min.

Suitable PP polymers are known and commercially available, such as under the trademarks Borstar, Innovene and VERSIFY^{™}. Others can be made by known processes, such as solution, slurry and/or gas-phase polymerization of propylene monomer and optionally comonomers in the presence of Ziegler-Natta catalysts, metallocene catalysts or other single site catalysts.

Some polyolefin elastomers contain copolymers or terpolymers of ethylene and/or propylene, sometimes with other comonomers. For example, some elastomers are ter-polymers of ethylene, propylene and dienes such as butadiene. Examples of suitable polyolefin elastomers are sold under the ENGAGE^{™}, INFUSE^{™}, AFFINITY^{™}, VERSIFY^{™}, INTUNE^{™} and NORDEL^{™} trademarks. Others can be made by known polymerization processes ad already described. In some embodiments, it may be useful to make the polyolefin elastomers using metallocene catalysts.

In some embodiments, the polyolefin polymer may contain additives. Examples of common additives include antistatic agents, color enhancers, dyes, lubricants, fillers, pigments, primary antioxidants, secondary antioxidants, processing aids, UV stabilizers, nucleators, slip agents such as erucamide, antiblock agents such as talc, and combinations thereof. In some embodiments, additives (other than pigments and fillers) make up no more than 5 weight percent of the polyolefin or no more than 4 weight percent or no more than 3 weight percent or no more than 2 weight percent or no more than 1 weight percent. Pigments and fillers may sometimes make up a high portion of the polyolefin polymer, such as up to 10 or 20 or 25 weight percent. In some embodiments, additives make up essentially 0 weight percent of the polyolefin.

The quantity of polyolefin polymer in the composition may depend on the intended use of the polymer blend. Polymer blends that will be used directly to make fabricated items such as films may contain high levels of polyolefin and low levels of other components. For example, in some embodiments, the polyolefin polymer makes up at least 90 weight percent of the compositions of this invention, based on the combined weight of polyolefin, polyacid and polyol or at least 95 weight percent or at least 97 weight percent or at least 98 weight percent or at least 99 weight percent or at least 99.5 weight percent or at least 99.8 weight percent. In some embodiments, the polyolefin polymer makes up no more than 99.99 weight percent of the compositions of this invention, based on the combined weight of polyolefin, polyacid and polyol.

### Polyacid Component

The invention uses a polyacid polymer, which is a polymer having on average more than two carboxylic acid groups or metal carboxylate groups per molecule. In some embodiments, the polyacid polymer is poly-acrylic acid (PAA) polymer. A PAA is a polymer or copolymer that contains repeating units derived from acrylic acid or a homolog such as methacrylic acid or ethylacrylic acid, as shown in Formula 1: 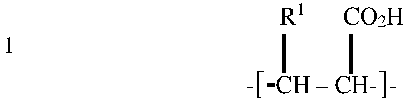 wherein each R¹ is independently a hydrogen or an alkyl group. In some embodiments, R¹ is hydrogen (derived from acrylic acid), and in some embodiments, R¹ is a methyl group (derived from methacrylic acid).

In some embodiments, the polyacid polymer is an ionomer, in which some or all of the carboxylic acid groups have been converted to metal carboxylate groups. For example, in Formula 1, some or all of the acidic hydrogen atoms may be substituted with a metal ion. Examples of common metal ions include alkali metal ions such as sodium and potassium, alkaline earth metal ions such as magnesium and calcium, and transition metal ions such as zinc. In some embodiments, the polyacid polymer is not an ionomer, meaning that the proportion of carboxylic acid groups have been converted to metal carboxylate groups is essentially zero or is low enough that it has no substantial impact on the properties of the polymer.

In some embodiments, at least 10 percent of acid groups in the polyacid polymer remain in an acidic state, or at least 30 percent or at least 50 percent or at least 70 percent or at least 80 percent. In some embodiments, essentially all of acid groups in the polyacid polymer (up to 100 percent) remain in an acidic state.

In some embodiments, the polyacid polymer is a PAA homopolymer, in which essentially all repeating units are derived from acrylic acid or a homolog.

In some embodiments, the polyacid polymer is a PAA copolymer in which some repeating units are derived from acrylic acid or a homolog and some repeating units are derived from a comonomer. In some embodiments, at least 1 weight percent of repeating units in the PAA polymer are derived from acrylic acid or a homolog, or at least 3 weight percent or at least 4 weight percent or at least 5 weight percent. In some embodiments, at most 40 weight percent of repeating units in the PAA polymer are derived from acrylic acid or a homolog, or at most 25 weight percent or at most 20 weight percent or at most 15 weight percent or at most 12 weight percent or at most 10 weight percent. In some embodiments, at least 75 weight percent of repeating units in the PAA polymer are derived from comonomers, or at least 80 weight percent or at least 85 weight percent or at least 88 weight percent or at least 90 weight percent. In some embodiments, up to 99 weight percent of repeating units in the PAA polymer are derived from comonomers, or up to 97 weight percent or up to 96 weight percent or up to 95 weight percent.

Suitable comonomers include unsaturated monomers capable of free-radical polymerization. Examples of suitable comonomers include methyl acrylate, ethyl acrylate, butyl acrylate, methyl methacrylate, ethylene, propylene and styrene. In some embodiments, the comonomer is ethylene.

Examples of commonly-available PAA copolymers include copolymers containing 5 to 20 (or 5 to 15) weight percent repeating units derived from acrylic or methacrylic acid and 80 to 95 (or 85 to 95) weight percent repeating units derived from ethylene.

In some embodiments, the polyacid polymer is solid at ambient temperature. In some embodiments, the polyacid polymer has a melting temperature of at least 50°C or at least 60°C or at least 70°C or at least 80°C or at least 90°C or at least 100°C. In some embodiments, the polyacid polymer has a melting temperature that is at or below the ordinary extrusion of the polyolefin, which is a temperature at which the polyolefin becomes plastic enough for extrusion but does not substantially degrade. In some embodiments, the polyacid polymer melts at a temperature of at most than 190°C or at most 170°C or at most 150°C or at most 130°C.

Suitable polyacid polymers are commercially available, such as under the NUCREL^{™} trademark. Other polyacid polymers can be made by free-radical polymerization of acrylic acid or its homolog, optionally with comonomers, according to known processes.

In compositions of this invention, the ratio of polyacid polymer to polyolefin is at least 100 ppmw. The best ratio depends on the intended use of the resulting polymer blend.

In some embodiments where the polymer blend will be used directly to make shaped articles such as films, the ratio of polyacid polymer to polyolefin is at least 200 parts-per-million-by-weight (ppmw) or at least 300 ppmw or at least 400 ppmw or at least 500 ppmw or at least 600 ppmw or at least 700 ppmw or at least 800 ppmw or at least 900 ppmw or at least 1000 ppmw (0.1 weight percent). In some embodiments where the polymer blend will be used directly to make shaped articles such as films, the ratio of polyacid polymer to polyolefin is at most 10 weight percent or at most 5 weight percent or at most 3 weight percent or at most 2 weight percent or at most 1 weight percent or at most 0.5 weight percent or at most 0.3 weight percent or at most 0.2 weight percent.

In some embodiments where the polymer blend will be used as a masterbatch, the quantity of polyacid polymer may be higher. For example, the ratio of polyacid polymer to polyolefin may be at least 1 weight percent or at least 2 weight percent or at least 3 weight percent or at least 5 weight percent, and the ratio of polyacid polymer to polyolefin may be at most 25 weight percent or at most 20 weight percent or at most 15 weight percent.

### Polyol Component

The invention uses a polyol, which is a compound or polymer that comprises on average at least 2 reactive hydroxyl groups per molecule. In some cases, the polyol contains on average more than 2 reactive hydroxyl groups per molecule, or at least 3 reactive hydroxyl groups per molecule or at least 4 reactive hydroxyl groups per molecule or at least 6 reactive hydroxyl groups per molecule or at least 8 reactive hydroxyl groups per molecule.

Examples of small molecule polyols include ethylene glycol, glycerol and bisphenol A,

In some embodiments, the polyol is a polyol polymer. Examples of polyol polymers include poly-vinyl alcohol (PVOH). PVOH is a polymer or copolymer that contains repeating units derived from vinyl alcohol, as shown in Formula 2. A common example of a PVOH polymer is ethylene vinyl alcohol (EVOH) copolymer.

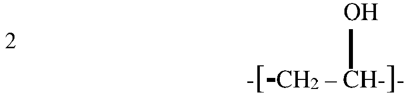

In some embodiments, the PVOH polymer is a copolymer in which some repeating units are derived from vinyl alcohol and some repeating units are derived from a comonomer. In some embodiments, at least 1 weight percent of repeating units in the PVOH polymer are derived from vinyl alcohol, or at least 5 weight percent or at least 10 weight percent or at least 15 weight percent or at least 20 weight percent or at least 25 weight percent or at least 30 weight percent. In some embodiments, up to 100 weight percent of repeating units in the PVOH polymer are derived from vinyl alcohol, or at most 75 weight percent or at most 60 weight percent or at most 50 weight percent or at most 40 weight percent or at most 35 weight percent. In some embodiments, at least 25 weight percent of repeating units in the PVOH polymer are derived from comonomers, or at least 40 weight percent or at least 50 weight percent or at least 60 weight percent or at least 65 weight percent. In some embodiments, at most 99 weight percent of repeating units in the PVOH polymer are derived from comonomers, or at most 95 weight percent or at most 90 weight percent or at most 85 weight percent or at most 80 weight percent or at most 75 weight percent or at most 70 weight percent. In some embodiments, the PVOH polymer is ethylene vinyl alcohol (EVOH) copolymer.

Suitable comonomers include unsaturated monomers capable of free-radical polymerization. Examples of suitable comonomers include vinyl acetate, ethylene, propylene and styrene. In some embodiments, the comonomer is ethylene.

Examples of commonly-available polyols include ethylene vinyl alcohol copolymers containing 50 to 80 (or 55 to 75) mole percent vinyl alcohol units and 20 to 50 (or 25 to 45) mole percent repeating units derived from ethylene.

In some embodiments, the melt index of polyol polymer is at least 0.1 g/10 min or at least 0.5 g/10 min or at least 1 g/10 min. In some embodiments, the melt index of polyol polymer is at most 30 g/10 min or at most 20 g/10 min or at most 10 g/10 min.

In some embodiments, the polyol polymer is solid at ambient temperature. In some embodiments, the polyol polymer has a glass-transition temperature of at least 40°C or at least 45°C or at least 50°C or at least 55°C. In some embodiments, the polyol polymer has a glass transition temperature that is at or below the ordinary extrusion temperature of the polyolefin, which is a temperature at which the polyolefin becomes plastic enough for extrusion but does not substantially degrade. In some embodiments, the polyacid polyol melts at a temperature of at most than 190°C or at most 170°C or at most 150°C or at most 130°C or at most 100°C.

Suitable polyol polymers are commercially available, such as under the trademarks Eval, Soarnol, Elvanol and Vinarol. Others can be made by a two-step process of (1) polymerizing ethylene vinyl acetate, optionally with comonomers, to make a vinyl acetate polymer, and (2) hydrolyzing at least some of the pendant acetate groups on the vinyl acetate polymer to form pendant hydroxyl groups.

The ratio of polyacid polymer to polyol should be suitable to link the polyacid polymer to the polyol by condensation reactions between acid groups on the polyacid polymer and hydroxyl groups on the polyol. In some embodiments, the molar ratio of acid groups on the polyacid polymer to active hydroxyl groups on the polyol is at least 1:10 or at least 1:5 or at least 1:2 or at least 1:1.2. In some embodiments, the molar ratio of acid groups on the polyacid polymer to active hydroxyl groups on the polyol is at most 10:1 or at most 5:1 or at most 2:1 or at most 1.2:1. Then the polyacid is an ionomer, the metal carboxylate groups in the ionomer may be included with the acid groups in this ratio.

In some embodiments where the polyol is a polymer, the weight ratio of polyol polymer to polyolefin is at least 20 ppmw. In some embodiments, the ratio of polyol polymer to polyolefin is at least 50 ppmw or at least 100 ppmw or at least 150 ppmw or at least 180 ppmw or at least 200 ppmw. In some embodiments, the ratio of polyol polymer to polyolefin is at most 5 weight percent or at most 3 weight percent or at most 1 weight percent or at most 0.5 weight percent or at most 0.2 weight percent or at most 1000 ppmw or at most 500 ppmw or at most 300 ppmw.

In some embodiments where the polymer blend will be used as a masterbatch, the quantity of polyol polymer may be higher. For example, the ratio of polyol polymer to polyolefin may be at least 0.2 weight percent or at least 1 weight percent or at least 3 weight percent, and the ratio of polyol polymer to polyolefin may be at most 15 weight percent or at most 10 weight percent or at most 5 weight percent.

### Polymer blend, Process to Make It and Fabrication

The polyolefin, polyacid polymer and polyol are melt-blended in the proportions that are previously described under conditions such that the polyacid polymers and the polyol polymers undergo condensation reaction to form ester groups cross-linking the polyacid polymers and the polyol. Equipment for melt-blending is commercially available, and processes for melt-blending are well-known. See, for example, Subramanian, Ch. 10 Processing Technology, in Polymer Blends and Composites: Chemistry and Technology, at 251-287, published 2017 by John Wiley & Sons. In summary, the polyolefin, polyacid polymer and polyol are subjected to heat and shear in an extruder, blender or kneader or similar equipment until they melt and become homogeneously blended together and acid/metal carboxylate groups on the polyacid polymer react with hydroxyl groups on the polyol polymer to form ester linkages cross-linking the polymers. Extruders are commonly used blending equipment, and extrusion is a commonly used blending technology. See 02 Extrusion-Technical Guide, published by Qenos Pty, Ltd (2015) and available at qenos.com. In some embodiments, the melt temperature during blending is at least 180°C or at least 185°C or at least 190°C. In some embodiments, the melt temperature during blending is at most 260°C or at most 250°C or at most 245°C or at most 230°C or at most 220°C or at most 210°C.

Optionally, other polymers may be included in the mixture that is melt-blended. In some embodiments, other polymers that are melt-blended with the inventive combination are compatible with the polyolefin polymer. In some embodiments, other polymers are melt-blended with the inventive combination in the presence of a compatibilizer that helps the other polymers to be compatible with the polyolefin polymer. In some embodiments, essentially no other polymers are included in the melt-blending, aside from the polyolefin, poly-acid and polyol.

Optionally, additives that are suitable for polyolefin polymers may be added during the melt-blending. Suitable additives and their use are described earlier in this document.

As previously described, acid (or metal carboxylate) groups on the polyacid polymer react with hydroxyl groups on the polyol during melt-blending to form ester linkages linking the polyacid polymer and the polyol in a condensation product. In some embodiments, multiple acid (or metal carboxylate) groups on the polyacid polymers react with multiple hydroxyl groups on the polyols to form a condensation product that forms a cross-linked network.

The product of the reaction is a polymer blend that contains the polyolefin polymer and a condensation product of the polyacid polymer and the polyol.

The polyolefin polymer in the polymer blend is the same polymer that was used in the melt-blending and has the same description, preferred embodiments and concentration described previously.

The condensation product in the polymer blend reflects the polyacid polymer and the polyol that were used to make it. From the structure of the polyacid polymer and the polyol and from on the low levels of phase-separation that are observed, it is hypothesized that in some embodiments the condensation product is a cross-linked network. It is further hypothesized that the condensation product forms a semi-interpenetrating network in which polyolefin molecules are physically entangled in the condensation product network.

The concentration of the condensation product reflects the combined concentration of the polyacid polymer and the polyol polymer during melt-blending. The ratio of condensation product to polyolefin in the polymer blend is at least 100 ppmw. In some embodiments, the ratio of condensation product to polyolefin in the polymer blend is at least 200 ppmw or at least 300 ppmw or at least 400 ppmw or at least 500 ppmw or at least 600 ppmw or at least 700 ppmw or at least 800 ppmw or at least 900 ppmw or at least 1000 ppmw. In some embodiments that are intended for use in finished products, the ratio of condensation product to polyolefin in the polymer blend is at most 10 weight percent or at most 5 weight percent or at most 3 weight percent or at most 2 weight percent or at most 1 weight percent or at most 0.5 weight percent or at most 0.3 weight percent or at most 0.2 weight percent.

In some embodiments that are intended for use as master-batches to be blended with more polyolefin later, the ratio of condensation product to polyolefin in the polymer blend is higher than for finished products. In some embodiments, a master batch contains at least 1 weight percent of condensation productor or at least 3 weight percent or at least 5 weight percent. In some embodiments, a master batch contains at most 25 weight percent condensation product or at most 20 weight percent or at most 15 weight percent.

In some embodiments, the blend is homogeneous - without substantial phase separation. In some embodiments, the blend is a semi-interpenetrating network (semi-IPN) that contains polyolefin polymer, which is largely uncross-linked, interpenetrating a crosslinked polymer network that is the condensation product of the polyacid polymer and the polyol polymer.

The polymer blend leaves the melt-blending step as a melt that can be used in conventional fabrication processes to make films or other shaped articles. Films can be made by known processes, such as cast film processes, blown film processes (optionally with water-quenching) or extrusion coating processes.
- In a cast film extrusion, the die is a slot die, and the film is extruded onto a chill roll, quenched, and wound onto a roll.
- In a blown film extrusion, the die is a circular die. A gas bubble (such as air or nitrogen) is trapped inside the circular film between the die and a pair of downstream nip rollers.

The film passes over the air bubble before it solidifies and is biaxially stretched. The film is cooled, flattened, and wound into a roll.
- In extrusion coating, molten resin is extruded as a coating onto a substrate such as paper, corrugated, or uncorrugated cardboard, fiberboard, metal foil, cellulose, nonwoven mat, or plastic film.

In some embodiments, the polymer melt is extruded alone to form a single layer of film. In some embodiments, the polymer melt is coextruded with one or more other polymers to form one or more layers in a multi-layer structure. For example, it is known to co-extrude polyolefins into multi-layer structures wherein the polyolefin layer is a structural layer that provides the main physical properties of strength and flexibility to the multi-layer film, and other layers may include one or more of the following:
- A heat seal layer that rapidly forms strong heat seals, such as enhanced polyethylene polymers that are commercially available under the ELITE^{™} trademark and certain LLDPE polymers commercially available under the DOWLEX^{™} trademark.
- A print layer that contains polymers selected to have a good appearance, such as high gloss, and to provide a good surface for adhesion of ink. Examples of common polymers in the print layer include LLDPE derived from Ziegler-Natta or metallocene catalysts. Common print layer polymers are commercially available under the trademark DOWLEX^{™} GM 8051, DOWLEX^{™} TG2085B, DOWLEX^{™} GM8070, DOWLEX^{™} 2049, ELITE^{™} AT 6501 and INNATE^{™} ST50.
- A barrier layer to reduce the migration of gases, moisture and/or flavor elements through a multilayer film. Examples of common barrier polymers include ethylene vinyl alcohol, ethylene vinyl acetate, polyvinylidene chloride, polypropylene, polyamide, polyethylene terephthalate, and polyvinyl chloride. Polymers for the barrier layers are commercially available, such as under the trademarks SARAN^{™}, Eval, Nylon-6 and Miramid.
- Tie layers to improve the adhesion of different layers in a multilayer film, especially when different layers contain incompatible polymers. Examples of common tie layer polymers include ethylene acrylic acid copolymers and ethylene vinyl acetate copolymers. Examples of common tie layers are commercially available under the trademarks BYNEL^{™}, Plexar, EMAC, Surpass and Novapol. A print layer that contains a polymer that forms a good surface for printing,
Multilayer films may have from 2 to 9 or more layers.

In some embodiments, the film has a thickness of at least 10 µm or at least 20 µm or at least 30 µm. In some embodiments, the film has a thickness of at most 200 µm or at most 150 µm or at most 120 µm or at most 100 µm.

Alternatively, the polymer melt can be molded into shaped articles by known processes, such as extrusion, injection molding, compression molding, and blow molding. Each of these processes is well-known and described in many publications, and equipment to practice it is commercially available.

In a common alternative, the polymer melt is extruded as strands, cooled and chopped to form pellets. See, for example, "Melt-to-Pellet Conversion", published by KraussMaffei at https://www.kraussmaffei.com/en/download-area. Masterbatches, which are previously described, and finished polyolefin resins are often pelletized for convenient storage and transportation. Some pellets may have a diameter between 1 mm and 5 mm and may have a length between 1 mm and 10 mm. The pellets are re-melted and made into shaped articles later using the processes described above.

The polymer blends of this invention can have improved physical properties as compared with the base polyolefin polymer used to make them. For example,
- In some embodiments, the puncture force of a single layer film containing the polymer blend of this invention is at least 5 percent higher than the puncture force of a similar film containing the corresponding polyolefin polymer, when measured according to the test methods, or at least 10 percent higher or at least 15 percent higher or at least 20 percent higher or at least 25 percent higher or at least 30 percent higher. There is no maximum desired improvement, but improvements greater than 100 percent or 50 percent may be unnecessary.
- In some embodiments, the elongation before puncture of a single layer film containing the polymer blend of this invention is at least 2 percent higher than the elongation before puncture of a similar film containing the corresponding polyolefin polymer, when measured according to the test methods, or at least 5 percent higher or at least 10 percent higher or at least 15 percent higher or at least 20 percent higher. There is no maximum desired improvement, but improvements greater than 100 percent or 50 percent may be unnecessary.
- In some embodiments, the dart drop impact resistance of the polymer blend of this invention is at least 5 percent higher than the dart drop impact resistance of the corresponding polyolefin polymer, when measured according to the test methods, or at least 10 percent higher or at least 15 percent higher or at least 20 percent higher or at least 25 percent higher. There is no maximum desired improvement, but improvements greater than 100 percent or 50 percent may be unnecessary.

### Test Methods

Parameters described in this application can be measured using the following measurements:

| Parameter | Test |
|---|---|
| Density | ASTM D792 |
| Melt Index | ASTM D1238 (at 190°C with 2.16 kg weight) |
| Flow Index | ASTM D1238 (at 190°C with 21.6 kg weight) |
| Melting Point | ASTM D3418 |
| Puncture Force and Elongation | ASTM D5748-95 |
| Dart Drop Impact | ISO 7765-1 |

### EXAMPLES

The raw materials shown in Table 1 are used in the Examples:

**Table 1**

| | | |
|---|---|---|
| **Polyolefin** | DOWLEX^{™} 2645G | LLDPE (Ziegler Natta) resin with melt index of 0.9 dg/min MI and density of 0.919 g/cc |
| **Polyacid** | NUCREL^{™} 0903HC | Acid copolymer resin that contains 9% methacrylic acid has a melt index of 2.5 dg/min. |
| **Polyol** | Eval F171B | Ethylene-vinyl alcohol copolymer with 32% ethylene content and a melt index of 1.6 dg/min. |

### Small Scale (10 kg/hr) Extrusion (Inventive Examples IE A - IE C and Comparative Examples CE 1 - CE 5)

The polyolefin, polyacid and polyol are hand mixed in proportions shown in Table 6. The mixture is coextruded in a Dr. Collins laboratory scale extruder fitted with a blown film line. The screw diameter is 30 mm, and the screw length is 25 times diameter. The annular die size was 60 mm. The unit operated at 50 rpm with a melt pressure of 261 bar and a melt temperature of 248°C. The temperature profile is shown in Table 2. The die gap is 0.8 to 1.2 mm. The blow-up ratio is 2.5, and the nip velocity is 3.6 to 3.8 m/min.

**Table 2 (°C)**

| **Zone 1** | **Zone 2** | **Zone 3** | **Zone 4** | **Adapter 1** | **Die 1** | **Die 2** | **Die 3** |
|---|---|---|---|---|---|---|---|
| 190 | 230 | 245 | 245 | 245 | 245 | 245 | 245 |

The extrusion product is a monolayer film having a thickness of about 50 micron. The films are tested for puncture force, puncture elongation and dart drop impact strength as described in the test methods. Results are shown in Table 6.

### Pelletizing and Medium-Scale (22 kg/hr) Extrusion (Inventive Examples IE D & IE E and Comparative Example CE 6)

The polyolefin, polyacid and polyol are precompounded in proportions shown in Table 6 and pelletized using a twin-screw extruder with a revolving blade cutting system. Each screw has a diameter of 24 mm. The temperature profile is shown in Table 3. Strands are cooled in a water bath at 15°C before cutting.

**Table 3**

| | |
|---|---|
| **Dosing Speed (Kg/h)** | 6 |
| **Melt Temperature Die (°C)** | 253 |
| **Melt Temperature Zone 1 (°C)** | 161 |
| **Melt Temperature Zone 2 (°C)** | 266 |
| **Screw Temperature Die (°C)** | 253 |
| **Screw Temperature Zone 1 (°C)** | 140 |
| **Screw Temperature Zone 2 (°C)** | 188 |
| **Screw Temperature Zone 3 (°C)** | 252 |
| **Screw Temperature Zone 4 (°C)** | 249 |
| **Screw Temperature Zone 5 (°C)** | 249 |

The resulting pellets are extruded at a rate of about 22.5 kg/hr. on a 45 mm Covex blown-film extrusion line. The settings are shown in Table 4.

**Table 4**

| | |
|---|---|
| **B.U.R.** | 2.5:1 |
| **Die gap (mm)** | 1.8 |
| **Melt Pressure (bar)** | 256 |
| **Motor Current (A)** | 33.8 |
| **Output Rate (Kg/h)** | 22.5 |
| **Screw Speed (rpm)** | 107.6 |
| **Take-off Speed (m/min)** | 7 |
| **Thickness (µm)** | 50 |

The extrusion product is a monolayer film having a thickness of about 50 micron. The films are tested for puncture force, puncture elongation and dart drop impact strength as described in the test methods. Results are shown in Table 6.

### Large Scale (200 kg/hr) Extrusion (Inventive Examples IE F - IE H and Comparative Example CE 7)

The polyolefin, polyacid and polyol are hand-mixed in proportions shown in Table 6. The mixture is extruded in a 5-layer structure (all layers are inventive resin) using a Macchi Coex 5 Flex blown film extruder. The extrusion details are shown in Table 5.

**Table 5**

| | | | | |
|---|---|---|---|---|
| **B.U.R. ( :1 )** | 2.5 | | **Motor Current - Layer A ( A )** | 52 |
| **Die Diameter ( mm )** | 300 | | **Motor Current - Layer B ( A )** | 51 |
| **Die gap ( mm )** | 2.5 | | **Motor Current - Layer C ( A )** | 98 |
| **Freeze line height ( mm )** | 600 | | **Motor Current - Layer D ( A )** | 46 |
| **Lay Flat ( mm )** | 1130 | | **Motor Current - Layer E ( A )** | 50 |
| **Layer A ( % )** | 25 | | **Screw Speed - Layer A ( rpm )** | 53 |
| **Layer B ( % )** | 15 | | **Screw Speed - Layer B ( rpm )** | 53 |
| **Layer C ( % )** | 30 | | **Screw Speed - Layer C ( rpm )** | 36 |
| **Layer D ( % )** | 15 | | **Screw Speed - Layer D ( rpm )** | 27 |
| **Layer E ( % )** | 15 | | **Screw Speed - Layer E ( rpm )** | 26 |
| **Melt P - Layer A (bar)** | 349 | | **Output Rate ( Kg/h )** | 198 |
| **Melt P - Layer B (bar)** | 255 | | **Take-off Speed ( m/min )** | 31.4 |
| **Melt P - Layer C ( bar)** | 252 | | **Thickness ( µm )** | 50 |
| **Melt P - Layer D (bar)** | 229 | | | |
| **Melt P - Layer E (bar)** | 207 | | | |
| **Melt T - Layer A (°C)** | 235 | | | |
| **Melt T - Layer B (°C)** | 232 | | | |
| **Melt T - Layer C (°C)** | 241 | | | |
| **Melt T - Layer D (°C)** | 233 | | | |
| **Melt T - Layer E (°C)** | 231 | | | |

The extrusion product is a five-layer film having a thickness of about 50 micron, in which each layer has the same composition. The films are tested for puncture force, puncture elongation and dart drop impact strength as described in the test methods. Results are shown in Table 6.

The examples show that polyolefin extruded with polyacid and polyol together has improved puncture resistance over polyolefin extruded with polyacid or polyol alone or without either polyacid or polyol.

**Table 6**

| **Example** | IE A | IE B | IE C | CE 1 | CE 2 | CE 3 | CE 4 | CE 5 | IE D | IE E | CE 6 | IE F | IE G | IE H | CE 7 |
|---|---|---|---|---|---|---|---|---|---|---|---|---|---|---|---|
| Polyacid (ppm) | 425 | 850 | 1275 | 0 | 0 | 425 | 850 | 1275 | 850 | 1275 | 0 | 425 | 850 | 1275 | 0 |
| Polyol (ppm) | 200 | 200 | 200 | 0 | 200 | 0 | 0 | 0 | 200 | 200 | 0 | 200 | 200 | 200 | 0 |
| Throughput (kg/hr) | 10 | 10 | 10 | 10 | 10 | 10 | 10 | 10 | 20 | 20 | 20 | 200 | 200 | 200 | 200 |
| Puncture Force (N) | 62.3 | 75.4 | 65.4 | 56.56 | 52.3 | 46.3 | 42.8 | 36.0 | 75.5 | 74.8 | 65.5 | 66.2 | 70.0 | 62.9 | 56.2 |
| Puncture Elongation (mm) | 110.0 | 138.0 | 113.7 | 106.6 | 97.3 | 89.7 | 80.6 | 68.6 | 120.5 | 128.1 | 125.0 | 105.6 | 115.5 | 108.8 | 95.3 |
| Dart (g) | 333 | 321 | 297 | 262 | 272 | 264 | 275 | 280 | | | | | | | |

## Claims

1. A polyolefin composition comprising:
a) At least 50 weight percent of a polyolefin polymer; and
b) At least 100 ppmw of a polyacid polymer, and
c) At least 20 ppmw of a polyol,
wherein weight ratios are based on the combined weights of the polyolefin polymer, the polyacid polymer and the polyol.

2. The polyolefin composition of claim 1, wherein the polyolefin polymer comprises polyethylene.

3. The polyolefin composition of any preceding claim, wherein the polyolefin polymer comprises linear low density polyethylene.

4. The polyolefin composition of any preceding claim, wherein the polyacid polymer comprises a copolymer containing repeating units derived from acrylic acid or methacrylic acid and repeating units derived from one or more comonomers selected from the group consisting of ethylene, propylene and styrene.

5. The polyolefin composition of any preceding claim, wherein the polyacid polymer is an ionomer.

6. The polyolefin composition of any preceding claim, wherein the polyacid polymer is not an ionomer.

7. The polyolefin composition of any preceding claim, wherein the polyol comprises a copolymer containing vinyl alcohol repeating units and repeating units derived from ethylene, propylene or styrene.

8. The polyolefin composition of any preceding claim, wherein the molar ratio of acid groups in the polyacid polymer to hydroxyl groups in the polyol is from 5:1 to 1:5.

9. The polyolefin composition of any preceding claim, wherein
a) the polyolefin polymer is a polyethylene polymer and makes up at least 75 weight percent of the polyolefin composition;
b) the polyacid polymer comprises a copolymer containing repeating units derived from acrylic acid or methacrylic acid and repeating units derived from ethylene; and
c) the polyol comprises a copolymer of containing vinyl alcohol repeating units and repeating units derived from ethylene,
wherein the molar ratio of acid groups in the polyacid polymer to hydroxyl groups in the polyol is from 5:1 to 1:5 and wherein weight ratios are based on the combined weights of polyolefin polymer, polyacid polymer and polyol.

10. The polyolefin composition of claim 9, wherein the polyolefin composition comprises:
a) at least 98 weight percent of the polyolefin polymer;
b) from 100 ppmw to 2000 ppmw of the polyacid polymer; and
c) from 50 ppmw to 1000 ppmw of the polyol,
wherein the weight percent is based on the combined weights of the polyolefin polymer, the polyacid polymer, and the polyol.

11. The polyolefin composition of claim 9, wherein the polyolefin composition comprises:
a) from 75 to 98 weight percent of the polyolefin polymer;
b) from 2 to 20 weight percent of the polyacid polymer; and
c) from 1 to 10 weight percent of the polyol;
wherein the weight percent is based on the combined weights of the polyolefin polymer, the polyacid polymer, and the polyol.

12. A process to make a polymer blend comprising the step of melt-blending the polyolefin composition of any one of claims 1 to 11 under conditions such that the polyacid polymer and the polyol undergo condensation reactions to form ester groups cross-linking the polyacid polymer and the polyol.

13. The process of claim 12, wherein the melt-blending is carried out in an extruder.

14. A polymer blend made by the process of claim 12 that comprises a polyolefin polymer and a condensation product formed by the condensation of a polyacid polymer and a polyol, which is dispersed within the polyolefin polymer.

15. A polymer blend comprising:
a) At least 50 weight percent of a polyolefin polymer;
b) At least 150 ppm of a condensation product formed by the condensation of a polyacid polymer and a polyol, which is dispersed within the polyolefin polymer.
wherein the weight ratios are based on the combined weights of the polyolefin polymer and condensation product.
